# DEMANDE DE BREVET EUROPEEN

(11) **EP 0 896 165 A1**
(43) Date de publication de la demande: **10.02.1999**
(21) Numéro de dépôt: 98401978.6
(22) Date de dépôt: 04.08.1998
(51) Int. Cl.: F16D 13/52, F16D 13/64, F16D 55/36, F16D 65/12

(54) **Dispositif de friction dans l'huile à disques coaxiaux**

(30) Priorité: 05.08.1997 FR 9710003
(71) Demandeur: MESSIER BUGATTI, F-78140 Velizy Villacoublay (FR)
(72) Inventeur: Borgeaud, Olivier, 38150 Assieu (FR); Gumez, Hervé, 64230 Lescar (FR)
(74) Mandataire: Joly, Jean-Jacques

(57) **Abrégé**

Des disques fous (30) en matériau composite carbone/carbone sont intercalés chacun entre un disque métallique (10) rotor ou menant et un disque métallique (20) stator ou mené. Chaque disque fou C/C est centré par une porte (14) qui est formée dans un disque métallique adjacent et qui présente des passages (18) pour l'alimentation en huile de l'interface entre disque C/C et disque métallique.

## Description

La présente invention concerne un dispositif de friction dans l'huile à disques coaxiaux de forme annulaire, et plus particulièrement un dispositif de friction comprenant des disques métalliques alternant avec des disques en matériau composite carbone/carbone (ou disques C/C).

Des domaines d'application de l'invention sont notamment les boîtes de vitesses automatiques, les embrayages, les limiteurs de couple, les amortisseurs rotatifs à friction, les freins d'arbres de machines, et plus généralement tous systèmes utilisant des dispositifs de friction à disques dans l'huile.

Des disques de friction C/C constitués d'une préforme en fibres de carbone densifiée par une matrice de carbone, sont couramment utilisés dans des freins d'avions ou de véhicules automobiles de compétition.

Le comportement des matériaux composites carbone/carbone en frottement dans l'huile contre eux-mêmes ou contre un métal, tel que l'acier, a permis aussi d'envisager l'utilisation de ces matériaux dans des applications telles que celles évoquées plus haut. En effet, les matériaux C/C présentent alors une usure faible et un coefficient de frottement stable. Ils sont en outre peu sensibles aux effets de vitesse, aux variations d'inertie et aux variations de pression spécifique. De plus, le frottement des matériaux C/C dans l'huile est peu dépendant de la nature et de la viscosité des huiles utilisées.

Ainsi les documents US-A-5 409 428 et FR-A-2 729 726 décrivent une boîte de vitesses automatique utilisant des disques C/C en frottement contre des disques métalliques dans l'huile.

Dans les dispositifs de friction utilisant des disques C/C, la liaison entre les disques et les organes menants ou rotatifs, et menés ou fixes est généralement réalisée par des crans formés en périphérie des disques. Afin de pouvoir reprendre les efforts à ce niveau, sans risque de détérioration, il est nécessaire d'utiliser des disques suffisamment épais, ce qui augmente sensiblement le coût en raison du prix de revient élevé des matériaux C/C.

Un but de la présente invention est de proposer un dispositif de friction à disques dans l'huile permettant de bénéficier des propriétés des disques C/C à un coût avantageux.

Ce but est atteint du fait que, dans un dispositif de friction dans l'huile comprenant des disques métalliques alternant avec des disques C/C, les disques C/C sont des disques fous chacun intercalé entre un disque menant ou rotor et un disque mené ou stator.

Ainsi, aucun effort n'est à reprendre en périphérie des disques C/C. Ceux-ci peuvent donc être relativement minces, d'où une économie importante et un encombrement réduit.

Le centrage des disques C/C est avantageusement réalisé par une portée formée sur l'un des disques métalliques adjacents et présentant des passages pour l'alimentation en huile de l'interface entre le disque métallique et le disque C/C.

Il est important d'assurer la présence permanente d'huile entre les surfaces en regard des disques C/C et des disques métalliques pour éviter des échauffements locaux pouvant conduire à des dégradations et des déformations, et pour assurer un fonctionnement correct et stable du dispositif de friction. A cet effet, des chanfreins peuvent être formés le long des bords des disques C/C, au moins le long des bords extérieurs, tandis que des rainures peuvent être formées dans au moins l'une des deux surfaces adjacentes d'un disque C/C et d'un disque métallique.

En outre, les matériaux C/C obtenus par densification d'une préforme fibreuse présentent inévitablement une porosité résiduelle quel que soit le mode de densification utilisé : infiltration chimique en phase vapeur ou imprégnation par un précurseur de carbone à l'état liquide (par exemple une résine), suivie d'une carbonisation. La porosité résiduelle des disques C/C est utile pour agir comme réservoir d'huile aux interfaces avec les disques métalliques. Avantageusement, la porosité résiduelle est au moins égale à 15% en volume.

Un dispositif d'accouplement à friction utilisant un disque fou entre une surface solidaire d'un arbre menant et une surface solidaire d'un arbre mené est décrit dans le document DE-A-3 712 898. Toutefois, le disque fou est en matériau fritté et le montage décrit n'est pas susceptible de fonctionner de façon satisfaisante dans l'huile.

De préférence, les disques C/C sont centrés par leur périphérie extérieure. En effet, c'est dans la zone extérieure des disques que les échanges thermiques avec l'huile sont optimaux, de sorte que les variations dimensionnelles des disques métalliques y sont minimales. Le centrage des disques C/C fous est alors assuré avec la meilleure précision possible.

Avantageusement encore, au moins une partie des disques métalliques peuvent avoir un diamètre intérieur inférieur à celui des disques C/C. De la sorte, les parties internes des disques métalliques baignant dans l'huile, mais non en contact avec les disques C/C, agissent comme radiateurs pour assurer un meilleur refroidissement.

De préférence, les disques métalliques sont en acier et sont carburés au moins sur leurs surfaces frottantes afin d'augmenter la résistance à l'abrasion.

D'autres particularités et avantages des dispositifs de friction selon l'invention ressortiront à la lecture de la description faite ci-après, à titre indicatif mais non limitatif, en référence aux dessins annexés sur lesquels :
- la Figure 1 est une vue très schématique en coupe d'un dispositif de friction à disques conforme à l'invention ;
- la Figure 2 est une vue partielle de face et de détail d'une portée de centrage formée sur un disque métallique rotor du dispositif de la Figure 1 ;
- la Figure 3 est une vue en coupe suivant le plan III-III de la Figure 2, montrant également une partie des disques C/C et métalliques adjacents ;
- la Figure 4 est une vue en coupe similaire à celle de la Figure 3, montrant une variante de réalisation des disques métalliques ; et
- les Figures 5 et 6 sont des vues de face illustrant d'autres variantes de réalisation des disques du dispositif de la Figure 1.

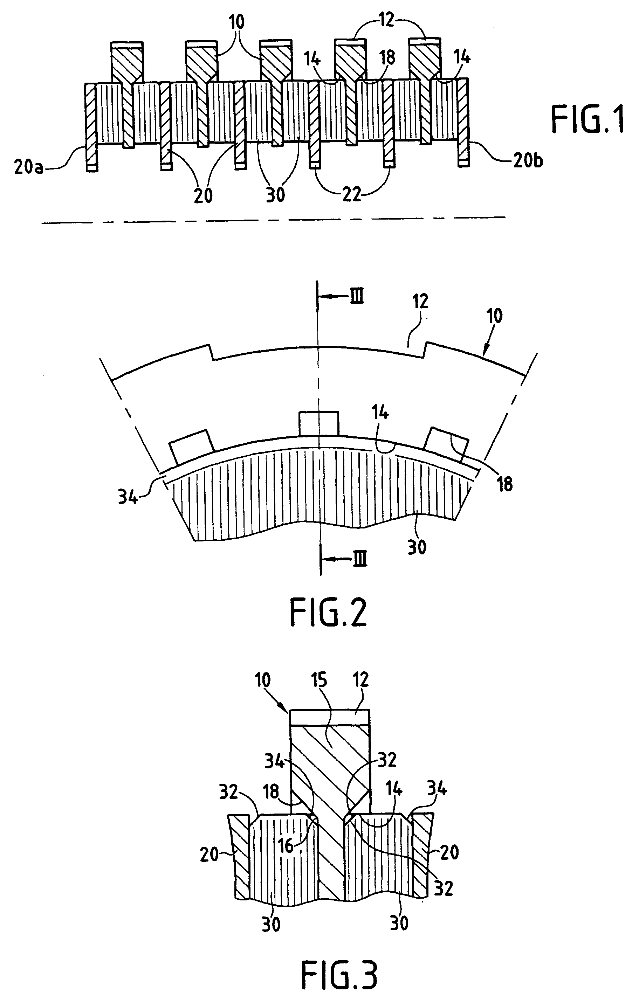

La Figure 1 illustre un dispositif de friction formé par un empilage de disques coaxiaux de forme annulaire, comprenant un premier groupe de disques métalliques 10, alternant avec des disques métalliques 20 d'un deuxième groupe, avec des disques fous 30 en matériau composite carbone/carbone (C/C) intercalés entre les disques des deux groupes.

Les disques 10 et 20, par exemple en acier, peuvent être des disques menants et menés, dans un embrayage ou une boîte de vitesses automatique, ou, comme dans l'exemple illustré, des disques rotors et stators dans un limiteur de couple ou un frein.

L'empilage de disques 10, 20, 30 est logé à l'intérieur d'un carter (non représenté) rempli d'huile. De façon classique, les disques peuvent être pressés les uns contre les autres en direction axiale au moyen d'un dispositif d'actionnement (non représenté) agissant sur les disques stators d'extrémité 20a, 20b.

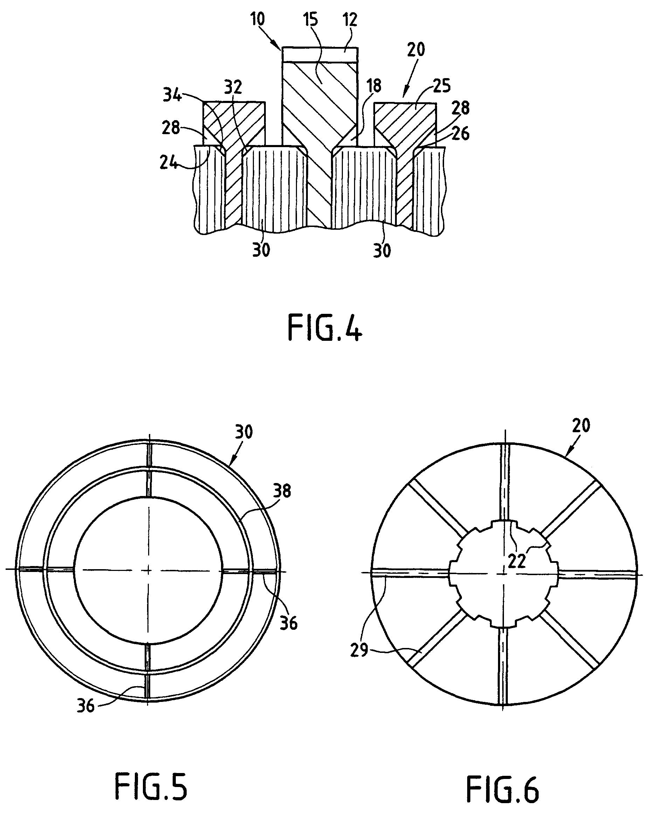

Les disques rotors 10 sont reliés à un organe rotatif au moyens de crans 12 formés à leur périphérie extérieure (Figures 1 et 2), tandis que les disques stators 20 sont reliés à un organe fixe au moyen de crans 22 formés à leur périphérie intérieure (Figures 1 et 5). Bien entendu, en variante, les crans de liaison des disques rotors pourraient être formés à la périphérie intérieure et ceux des disques stators à leur périphérie extérieure.

Les disques fous 30 sont centrés au moyen de portées 14 constituées par des décrochements formés dans les faces des disques rotors 10, ceux-ci ayant par conséquent une épaisseur plus faible au niveau de leurs faces frottantes qu'au niveau de leur couronne extérieure 15. Comme déjà indiqué, le centrage des disques fous à leur périphérie extérieure plutôt qu'à leur périphérie intérieure est préférable du fait que les dilatations d'origine thermique des disques métalliques sont moindres dans la zone extérieure de l'empilage de disques où les échanges thermiques avec l'huile sont optimaux.

Il est important d'éviter l'apparition de températures trop élevées sur les surfaces frottantes qui pourraient conduire à des dégradations ou déformations. A cet effet, l'alimentation en huile des interfaces entre disques et la circulation de l'huile dans ces interfaces doivent être favorisées.

Grâce à sa porosité résiduelle, le matériau C/C des disques 30 constitue un réservoir d'huile adjacent aux surfaces frottantes. Cette porosité, qui est contrôlée par le degré de densification du matériau, est de préférence au moins égale à 15% en volume, pour assurer cette fonction de réservoir, et est de préférence au plus égale à 40%, pour conserver au matériau C/C les propriétés mécaniques désirées.

Comme le montrent plus particulièrement les Figures 2 et 3, les portées de centrage 14 se raccordent avec les faces frottantes des disques 10 par des portions de surface arrondies 16, et des entailles 18 sont usinées en biseau en direction radiale dans les décrochements formant les portées 14. En outre, des chanfreins 32, 34 sont formés le long des bords extérieurs des disques 30. Les chanfreins 32, 34 coopèrent avec les entailles 18 pour alimenter en huile les interfaces entre disques rotors et disques fous et facilitent l'alimentation en huile des interfaces entre disques stators et disques fous. Quant aux parties de raccordement arrondies 16, elles contribuent non seulement à une meilleure rigidité des disques rotors 10, mais aussi à une meilleure circulation de l'huile entre disques rotors et disques fous.

La Figure 4 montre une variante de réalisation qui se distingue de celle des Figures 1 à 3 par le fait que les disques stators 20 présentent une couronne extérieure élargie qui se raccorde aux faces frottantes par des décrochements 24. Des entailles 28 sont formées dans la partie intérieure de la couronne 25, pour favoriser, avec les chanfreins 32, 34, l'alimentation en huile de l'interface entre disques 20 et disques 30, de la même manière que les entailles 18 favorisent l'alimentation en huile de l'interface entre disques 18 et disques 30. En outre, les décrochements 24 se raccordent aux faces frottantes des disques 20 par des portions de surface arrondies 26.

On notera que, dans le mode de réalisation de la Figure 4, le centrage des disques 30 peut être assuré soit par les portées 14 des disques 10, soit par les décrochements 24 des disques 20 formant alors portées de centrage.

Afin d'assurer qu'un volume d'huile suffisant soit conservé en permanence entre surfaces frottantes, des rainures pourront être formées dans celles-ci, sur les disques métalliques 10, 20 et/ou sur les disques C/C 30. La Figure 5 montre des rainures radiales 36 et une rainure circonférentielle 38 formées dans une face d'un disque 30, tandis que la Figure 6 montre des rainures radiales 29 formées dans une face d'un disque stator 20.

Les disques métalliques sont avantageusement utilisés comme radiateurs pour évacuer la chaleur engendrée par le frottement. Ainsi, les disques rotors 10 ont un diamètre intérieur inférieur à celui des disques fous, de manière à présenter une partie interne baignant librement dans l'huile, en plus de leur partie externe. Egalement, les disques stators 20 ont un diamètre intérieur sensiblement inférieur à celui des disques fous, en l'espèce inférieur à ce qui serait strictement nécessaire pour pouvoir ménager les crans 22.

Quelle que soit l'application envisagée pour le dispositif de friction selon l'invention, on utilisera de préférence des disques métalliques ayant des caractéristiques mécaniques élevées pour éviter toute déformation ou écrouissage des surfaces frottantes et assurer un contact avec les disques fous en C/C aussi parfait que possible. Avantageusement, les disques métalliques sont en acier et leurs surfaces frottantes sont carburées, par exemple par cémentation, pour augmenter la résistance à l'abrasion.

A titre d'exemples, les aciers suivants peuvent être utilisés :
- acier 42CD4 (0,42% C, 0,25% Si, 0,75% Mn, 1,10% Cr, 0,22% Mo, reste essentiellement Fe) trempé et revenu, de manière à présenter une résistance en limite élastique (Rₑ) pouvant atteindre au moins 900 MPa et une dureté au moins égale à 4 10 HV ;
- acier 16NCD13 (0,18% C, 0,65% Mn, 3,5% Ni, 1,4% Cr, 0,15% Mo, reste essentiellement Fe) cémenté et trempé, de manière à présenter une résistance Rₑ pouvant atteindre au moins 830 MPa et une dureté au moins égale à 360 HV.

D'autres nuances d'acier sont utilisables, par exemple l'acier XC48/50 (0,50 % C, 0,25 % Si, 0,75 % Mn, moins de 0,03 % S, reste essentiellement Fe) trempé et revenu, ou l'acier 20NCD2 (0,21 % C, 0,25 % Si, 0,75 % Mn, 0,50 % Cr, 0,20 % Mo, 0,55 % Ni, reste essentiellement Fe) trempé et revenu.

Les disques fous 30 en C/C sont réalisés par exemple de façon analogue à des disques de frein en C/C, par élaboration de préformes annulaires en fibres de carbone et densification des préformes par une matrice de carbone.

Des techniques d'élaboration de préformes annulaires sont bien connues et sont décrites par exemple dans les documents FR-A-2 726 013 ou FR-A-2 741 634. Les fibres utilisées peuvent être issues de différents précurseurs tels que le polyacrylonitrile (PAN) ou les brais.

A titre d'exemples, les matériaux C/C suivants peuvent être utilisés :
- matériau à base de fibres de PAN préoxydé avec un taux volumique de fibres de 15 à 30% (pourcentage du volume du matériau effectivement occupé par les fibres), une matrice de pyrocarbone obtenu par infiltration chimique en phase vapeur avec un taux volumique de matrice de 50 à 70% et un taux de porosité résiduelle de 15 à 30% ;
- matériau à base de fibres de PAN préoxydé avec un taux de fibres de 15 à 30%, une matrice de pyrocarbone obtenu par imprégnation par résine phénolique et carbonisation à 900°C avec un taux de matrice de 50 à 70% et un taux de porosité résiduelle de 15 à 30% ;
- matériau à base de fibres de carbone à précurseur PAN ou brai avec un taux de fibres de 25 à 30%, une matrice de pyrocarbone obtenu par infiltration chimique en phase vapeur ou par imprégnation par résine phénolique et carbonisation à 900°C avec un taux de matrice de 40 à 55% et un taux de porosité résiduelle de 20 à 30% ;
- matériau semblable au précédent, mais ayant subi une siliciuration partielle de manière à obtenir une matrice mixte pyrocarbone-carbure de silicium (la siliciuration peut être réalisée par imprégnation par du silicium fondu, comme décrit dans le document FR-A-2 741 063).

Le matériau C/C peut subir, après élaboration des disques, un traitement thermique à température élevée, par exemple environ 2200°C. La graphitation qui en résulte améliore la conductivité thermique et permet une réduction de la température de service des disques fous.

De tels matériaux C/C ont un excellent comportement en frottement dans l'huile, en particulier des caractéristiques de friction stables et reproductibles (pour un taux de porosité donné), une très faible usure, et une très faible sensibilité aux variations de vitesse d'inertie ou de pression spécifique. De plus, le comportement des matériaux C/C est très peu dépendant de la nature et de la viscosité des huiles utilisées. Des agents anti-oxydants ou anti-usure, par exemple des esters divers, des silicones, des siloxanes, des polyglycols ou des polyoléfines peuvent être additionnés à l'huile sans dégrader les performances des matériaux C/C.

La présente invention est en particulier remarquable du fait qu'elle permet de tirer parti de ces qualités des matériaux C/C à un coût avantageux puisque les disques fous peuvent avoir une épaisseur limitée et qu'il n'est pas nécessaire d'usiner des crans à leurs périphéries.

Un exemple particulier d'application de l'invention à un limiteur de couple sera maintenant décrit.

Le limiteur comprend deux disques fous en C/C de diamètre extérieur égal à 180 mm, de diamètre intérieur égal à 100 mm et d'épaisseur égale à 8 mm, placés de chaque côté d'un disque d'âme en acier d'épaisseur égale à 10 mm. Le disque est en acier 42CD4 trempé et revenu ayant une résistance Rₑ > 900 Mpa et un état de surface ra = 0,2. Le disque d'âme est entraîné par un arbre de transmission tandis qu'un dispositif presseur agit sur deux disques d'extrémité en acier solidaires d'un autre arbre de transmission. Les disques d'extrémité sont de même nature que le disque d'âme.

Les disques fous sont en composite C/C graphité comprenant une préforme en fibres de carbone à précurseur PAN densifiée par une matrice de pyrocarbone obtenue par infiltration chimique en phase vapeur. Le taux volumique de fibres est égal à 15 % et le taux volumique de porosité résiduelle est égal à environ 20 %.

Le limiteur de couple a été utilisé dans une huile de synthèse du commerce. Le limiteur assure la rotation des deux arbres de transmission à la même vitesse jusqu'à la limite de glissement. Les couples de déclenchements mesurés ont été répétitifs, environ égaux à 400m.N et constants au cours du temps.

## Revendications

1. Dispositif de friction dans l'huile à disques coaxiaux comprenant des disques métalliques (10, 20) alternant avec des disques en matériau composite carbone/carbone, ou disques C/C (30),
caractérisé en ce que les disques C/C (30) sont des disques fous intercalés chacun entre un disque métallique (10) rotor ou menant et un disque métallique (20) stator ou mené.

2. Dispositif selon la revendication 1, caractérisé en ce que chaque disque C/C (30) est centré par une portée (14 ; 24) formée dans un disque métallique (10 ; 20) adjacent, et présentant des passages (18 ; 28) pour l'alimentation en huile de l'interface entre le disque métallique et le disque C/C.

3. Dispositif selon la revendication 2, caractérisé en ce que chaque disque C/C (30) est centré par sa périphérie extérieure.

4. Dispositif selon l'une quelconque des revendications 1 à 3, caractérisé en ce que des chanfreins (32, 34) sont formés le long des bords extérieurs des disques C/C (30).

5. Dispositif selon l'une quelconque des revendications 1 à 4, caractérisé en ce que des rainures (29 ; 36, 38) sont formées dans au moins l'une des deux surfaces adjacentes d'un disque C/C et d'un disque métallique.

6. Dispositif selon l'une quelconque des revendications 1 à 5, caractérisé en ce que le matériau C/C des disques fous a une porosité résiduelle au moins égale à 15%.

7. Dispositif selon l'une quelconque des revendications 1 à 6, caractérisé en ce que le matériau C/C des disques fous a une porosité résiduelle au plus égale à 40%.

8. Dispositif selon l'une quelconque des revendications 1 à 7 caractérisé en ce que le matériau C/C des disques fous est graphité.

9. Dispositif selon l'une quelconque des revendications 1 à 8, caractérisé en ce qu'au moins une partie des disques métalliques (10, 20) ont un diamètre intérieur inférieur à celui des disques C/C (30) de manière que leurs parties internes forment des radiateurs baignant dans l'huile.

10. Dispositif selon l'une quelconque des revendications 1 à 9, caractérisé en ce que les disques métalliques (10, 20) sont en acier.

11. Dispositif selon la revendication 10, caractérisé en ce que les disques en acier (10, 20) sont carburés sur leurs surfaces frottantes.
